# EUROPEAN PATENT APPLICATION

(11) **EP 3 796 285 A1**
(43) Date of publication of application: **24.03.2021**
(21) Application number: 19909985.4
(22) Date of filing: 17.12.2019
(51) Int. Cl.: G08G 1/16

(54) **VEHICLE CONTROL METHOD, APPARATUS, DEVICE, AND COMPUTER STORAGE MEDIUM**

(30) Priority: 15.01.2019 CN 201910036316
(71) Applicant: Beijing Baidu Netcom Science and Technology Co., Ltd., Beijing 100085 (CN)
(72) Inventor: ZHU, Xiaoxing, Beijing 100085 (CN); LIU, Xiang, Beijing 100085 (CN); YANG, Fan, Beijing 100085 (CN)
(74) Representative: dompatent von Kreisler Selting Werner - Partnerschaft von Patent- und Rechtsanwälten mbB
(86) International application number: PCT/CN2019/126015
(87) International publication number: WO 2020/147486

(57) **Abstract**

A method, an apparatus, a device and a computer storage medium for vehicle control are disclosed. The method includes: obtaining information about an obstacle to be recognized around an autonomous vehicle scanned with a LiDAR; performing obstacle recognition using the information about the obstacle to be recognized; determining a roadside blind region of the autonomous vehicle based on a result of the obstacle recognition; judging a risk of collision between the autonomous vehicle and a traffic participant appearing from the roadside blind region; and controlling the travel of the autonomous vehicle according to a result of the judgment. The autonomous vehicle is controlled in advance to decelerate by judging the risk of collision between the traffic participant appearing from the roadside blind region and the autonomous vehicle, thereby improving the safety of the autonomous vehicle.

## Description

The present disclosure claims priority to Chinese patent application No. 201910036316.9, filed on January 15, 2019, entitled "Method and Apparatus for Yielding to Traffic Participant Appearing from Roadside Blind Region with LiDAR".

### TECHNICAL FIELD

The present disclosure relates to the field of automatic control, and particularly to a method, an apparatus, a device and a computer storage medium for vehicle control.

### BACKGROUND

In an autonomous vehicle, various types of sensors, such as a GPS-IMU (Global Positioning System-Inertial Measurement Unit) combination navigation module, a camera, a LiDAR and a millimeter wave radar, are integrated.

During the travel of the autonomous vehicle, obstacles are detected mainly by a LiDAR. However, in existing obstacle detection of autonomous vehicles, only obstacles appearing in the field of vision of the LiDAR can be detected, and situations in blind regions caused by the blocking of obstacles cannot be detected. As for "sudden appearance", namely, a case that traffic participants such as pedestrians, bicycles, vehicles and animals suddenly appear from the blind regions caused by the blocking of other obstacles, the autonomous vehicle can respond, e.g., brake, only after recognizing the traffic participants; since the sudden appearance of the traffic participants leaves a limited time for the autonomous vehicle to respond, collision might happen even though the vehicle brakes, which increases the possibility of occurrence of sudden dangers and accidents.

### SUMMARY

Aspects of the present disclosure provide a method and an apparatus for vehicle control to yield to the traffic participant suddenly appearing from the roadside blind region and to avoid collision accidents.

An aspect of the present disclosure provides a method for vehicle control which includes:
obtaining information about an obstacle to be recognized around an autonomous vehicle scanned with a LiDAR, and computing a roadside blind region of the autonomous vehicle;
judging a risk of collision between the autonomous vehicle and a traffic participant appearing from the roadside blind region;
controlling the travel of autonomous vehicle according to whether there is the risk of collision.

The above aspect and any possible implementation further provide an implementation: computing a roadside blind region of the autonomous vehicle includes:
obtaining location information and heading information of the autonomous vehicle, and obtaining the blind region of the autonomous vehicle based on a location relationship between the autonomous vehicle and the road where the autonomous vehicle is, and the result of obstacle recognition;
according to a current lane where the autonomous vehicle is, determining roadside blind regions, among the blind regions, on either side of the lane where the autonomous vehicle is.

The above aspect and any possible implementation further provide an implementation: before judging the risk of collision between the autonomous vehicle and the traffic participant appearing from the roadside blind region, the method further includes: judging whether a current road scenario is a potential collision scenario, judging criteria including: there is a roadside blind region, the roadside blind region is caused by a large-sized vehicle, and the large-size vehicle is individually located on a road nearside lane.

The above aspect and any possible implementation further provide an implementation: judging the risk of collision between the autonomous vehicle and a traffic participant appearing from the roadside blind region includes:
determining that there is the risk of collision in response to determining that an absolute value of a difference between a time for the autonomous vehicle arriving at an intersection point and a time for the traffic participant arriving at the interaction point is smaller than or equal to a preset safety threshold.

The above aspect and any possible implementation further provide an implementation: controlling the travel of autonomous vehicle according to whether there is the risk of collision:
controlling the autonomous vehicle to decelerate in response to determining that there is the risk of collision.

The above aspect and any possible implementation further provide an implementation: controlling the autonomous vehicle to decelerate includes:
adjusting the speed of the autonomous vehicle so that the shortest braking distance of the autonomous vehicle is smaller than a distance between the autonomous vehicle and the intersection point.

The above aspect and any possible implementation further provide an implementation: the method further includes:
judging repeatedly the risk of collision between the autonomous vehicle and the traffic participant appearing from the roadside blind region with a preset time interval.

Another aspect of the present disclosure provides an apparatus for vehicle control which includes:
an obtaining module configured to obtain information about an obstacle to be recognized around an autonomous vehicle scanned with a LiDAR, and compute a roadside blind region of the autonomous vehicle;
a judging module configured to judge a risk of collision between the autonomous vehicle and a traffic participant appearing from the roadside blind region; and
a controlling module configured to control the travel of autonomous vehicle according to whether there is the risk of collision.

The above aspect and any possible implementation further provide an implementation: the obtaining module is specifically configured to:
obtain location information and heading information of the autonomous vehicle, and obtain the blind region of the autonomous vehicle based on a location relationship between the autonomous vehicle and the road where the autonomous vehicle is, and a result of obstacle recognition;
according to a lane where the autonomous vehicle is, determine roadside blind region, in the blind region, on either side of the lane where the autonomous vehicle is.

The above aspect and any possible implementation further provide an implementation: before judging the risk of collision between the autonomous vehicle and the traffic participant appearing from the roadside blind region, the judging module is further configured to judge whether a current road scenario is a potential collision scenario, and judging criteria includes: there is a roadside blind region, the roadside blind region is caused by a large-sized vehicle, and the large-size vehicle is individually located on a road nearside lane.

The above aspect and any possible implementation further provide an implementation: the judging module is specifically configured to:
determine that there is the risk of collision in response to determining that an absolute value of a difference between a time for the autonomous vehicle arriving at an intersection point and a time for the traffic participant arriving at the interaction point is smaller than or equal to a preset safety threshold.

The above aspect and any possible implementation further provide an implementation: the control module is specifically configured to:
control the autonomous vehicle to decelerate in response to determining that there is the risk of collision.

The above aspect and any possible implementation further provide an implementation: the controlling module is specifically configured to:
adjust the speed of the autonomous vehicle so that the shortest braking distance of the autonomous vehicle is smaller than a distance between the autonomous vehicle and the intersection point.

The above aspect and any possible implementation further provide an implementation: the judging module repeatedly judges the risk of collision between the autonomous vehicle and the traffic participant appearing from the roadside blind region with a preset time interval.

A further aspect of the present disclosure provides a computer device which includes a memory, a processor and a computer program which is stored on the memory and runs on the processor, the processor, upon executing the program, implementing the above-mentioned method.

A further aspect of the present disclosure provides a computer-readable storage medium on which a computer program is stored, the program, when executed by the processor, implementing the aforesaid method.

As may be known from the above technical solutions, in embodiments of the present disclosure, it is possible to, by predicting the risk of collision between the traffic participant suddenly appearing from the roadside blind region and the autonomous vehicle, the traffic participant suddenly appearing from the roadside blind region may be yielded to, and collision accidents may be avoided.

### BRIEF DESCRIPTION OF THE DRAWINGS

To describe technical solutions of embodiments of the present disclosure more clearly, figures to be used in the embodiments or in depictions regarding the prior art will be described briefly. Obviously, the figures described below are only some embodiments of the present disclosure. Those having ordinary skill in the art appreciate that other figures may be obtained from these figures without making inventive efforts.
FIG. 1 is a flow chart of a method for vehicle control according to some embodiments of the present disclosure;
FIG. 2 is a block diagram of an apparatus for vehicle control according to some embodiments of the present disclosure; and
FIG. 3 illustrates a block diagram of an example computer system/server 012 adapted to implement an implementation mode of the present disclosure.

### DETAILED DESCRIPTION OF EMBODIMENTS

To make objectives, technical solutions and advantages of embodiments of the present disclosure clearer, technical solutions of embodiment of the present disclosure will be described clearly and completely with reference to figures in embodiments of the present disclosure. Obviously, embodiments described herein are exemplary embodiments of the present disclosure, not all embodiments. All other embodiments obtained by those having ordinary skill in the art based on the embodiments of the present disclosure, without making any inventive efforts, fall within the protection scope of the present disclosure.

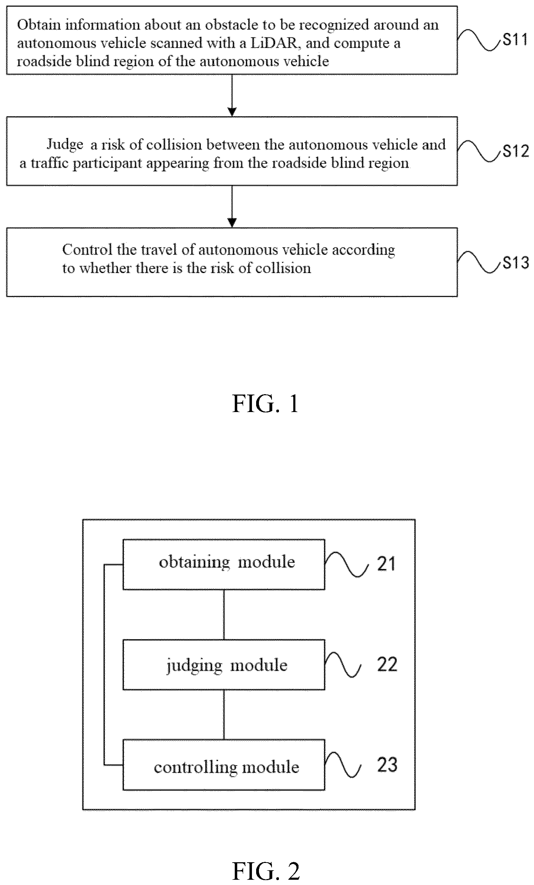

FIG. 1 is a flow chart of a method for vehicle control according to some embodiments of the present disclosure. As shown in FIG. 1, the method includes the following steps:
Step S11: obtaining information about an obstacle to be recognized around an autonomous vehicle scanned with a LiDAR, and computing a roadside blind region of the autonomous vehicle;
Step S12: determining a risk of collision between the autonomous vehicle and a traffic participant appearing from the roadside blind region;
Step S13: controlling the autonomous vehicle to decelerate in response to determining that there is the risk of collision.

In an optional implementation mode of Step S11,

According to some embodiments, an electronic device (e.g., an on-vehicle computer or on-vehicle terminal) on which the method for vehicle control for yielding to a traffic participant appearing from the roadside blind region is implemented may control a LiDAR sensor in a wired connection manner or a wireless connection manner. Specifically, the on-vehicle computer or on-vehicle terminal may control the LiDAR sensor to collect point cloud data of a certain region at a certain frequency. The above target region may be a region of the obstacle to be detected.

It is to be noted that the wireless connection manner may include but not limited to 3G/4G connection, WiFi connection, Bluetooth connection, WiMAX connection, Zigbee connection, UWB (ultra wideband) connection, and other currently-known or future-developed wireless connection manners.

The information about the obstacle to be recognized in some embodiments may be obtained by scanning with a LiDAR. The specification of the LiDAR may employ 16 lines, 32 lines or 64 lines, etc. The larger the number of lines is, the larger the unit energy density of the LiDAR is. In some embodiments, the LiDAR mounted on the current vehicle rotates 360 times each second, and scans for the information about the obstacle to be recognized around the current vehicle, the information being a frame of information about obstacle to be recognized. The information about obstacle to be recognized in some embodiments may include point cloud of the obstacle to be recognized and a reflection value of the obstacle to be recognized. There may be one obstacle or a plurality of obstacles to be recognized around the current vehicle. After the LiDAR scans, a centroid position of the current vehicle may be taken as an origin of a coordinate system, two directions parallel to a horizontal plane are taken as an x direction and a y direction, respectively, serving as a lengthwise direction and a widthwise direction, and a direction perpendicular to the ground surface is taken as a z direction, serving as a height direction. Then, the obstacle to be recognized may be identified in the coordinate system according to a relative position and distance between each point in the point cloud of the obstacle to be recognized and the origin.

In some embodiments, after the information about the obstacle to be recognized around the autonomous vehicle is obtained, a preset point cloud recognition model is used to recognize the obstacle to be recognized. The preset point cloud recognition model may be one of various pre-trained algorithms capable of recognizing the obstacle in the point cloud data, for example, ICP (Iterative Closest Point) algorithm, random forest algorithm or the like. After one or more obstacles in the point cloud data are recognized with the point cloud recognition model, the recognized obstacle is marked to obtain a marking result. When the recognized obstacle is marked, the marked shape may be a smallest rectangular parallelepiped circumscribing each obstacle, or may be an irregular curved surface close to the outer surface of each obstacle. It is to be noted that the above marking result includes the recognition result of each obstacle, e.g., the point cloud data includes a vehicle, a traffic participant and a tree, and that the marking result may also include a numerical number or character representing a different obstacle, for example, 1 represents a bus, 2 represents a car, and 3 represents a traffic participant.

The traffic participant may be a pedestrian, a bicycle, a vehicle, an animal etc. When the traffic participant appears on the road, it affects the travel of the autonomous vehicle.

In some embodiments, an example is taken in which the traffic participant is a pedestrian.

In some embodiments, a roadside blind region of the autonomous vehicle is obtained by calculating based on the travel direction of the autonomous vehicle and the position and size of the obstacle.

The location information and heading information of the autonomous vehicle are obtained, a location relationship between the autonomous vehicle and a road where the autonomous vehicle lies is determined, and the blind region of the autonomous vehicle is obtained by calculating based on the location relationship and the recognition result of the obstacle.

Optionally, a specific location of the autonomous vehicle on the road is determined by matching high-precision location information of the autonomous vehicle with a series of latitude and longitude recording points of road data, and then the blind region of the autonomous vehicle is obtained by calculating according to a road environment where the autonomous vehicle lies.

Optionally, tangential lines are made towards left and right edges of the obstacle by taking the LiDAR of the autonomous vehicle as the origin, and a sector region formed by the inside of the two tangential lines and the obstacle is determined as the blind region. The blind region is caused by the obstacle blocking the scanning of the LiDAR.

In the embodiments, a risk of potential collision between the autonomous vehicle and the traffic participant suddenly appearing ahead of the autonomous vehicle from the roadside blind region is focused on. Since a traffic participant in the blind region blocked by a vehicle in front of the autonomous vehicle will not suddenly appear, it does not affect the safe travel of the autonomous vehicle.

Optionally, a roadside blind region of either side of the lane where the autonomous vehicle is in the blind region is determined according to the lane where the autonomous vehicle is.

The roadside blind region is generally caused by a large-sized vehicle such as a bus or a truck parked on the nearside lane of the road or travelling on a lane outside the autonomous vehicle's lane. Since the large-sized vehicle has a large volume, it will block the scanning of the LiDAR so that the autonomous vehicle cannot know whether there is a traffic participant at the backside of the large-sized vehicle. If the traffic participant suddenly enters from the roadside blind region into the lane where the autonomous vehicle is travelling, even though the autonomous vehicle brakes, it is probably that the autonomous vehicle collides with the traffic participant since the braking distance is limited.

Judgement is made as to whether the current road scenario is a potential collision scenario. Judging criteria include: there is a roadside blind region, the roadside blind region is caused by a large-sized vehicle, and the large-size vehicle is individually located on the road nearside lane.

Optionally, merely the roadside blind region caused by the large-sized vehicle is generally considered. The preset point cloud recognition model may recognize the type and size of the corresponding obstacle to judge whether the obstacle is a large-sized vehicle.

Optionally, the lane lines of the road are recognized by a sensor such as a camera on the autonomous vehicle to determine whether the large-sized vehicle is located on the lane outside the current lane. If it is judged that the large-sized vehicle is parked on the road nearside lane, the large-sized vehicle is probably a bus at a bus stop for passengers getting on or off. In this case, it is probably that a traffic participant suddenly enters from the head of the bus into the lane where the autonomous vehicle is traveling (in the case that the bus is a bus traveling in the same direction as the autonomous vehicle), or suddenly enters from the tail of the bus into the lane where the autonomous vehicle is traveling (in the case that the bus is a bus traveling in a direction opposite to the autonomous vehicle).

Optionally, if the large-sized vehicle is individually located on the nearside lane of the road, it is considered that there is a large probability that a traffic participant appears from the roadside blind region in front of the large-sized vehicle and suddenly enters from the head of the vehicle into the lane where the autonomous vehicle is traveling (in the case that the large-sized vehicle is a bus traveling in the same direction as the autonomous vehicle), or suddenly enters from the tail of the bus into the lane where the autonomous vehicle is traveling (in the case that the bus is a bus traveling in a direction opposite to the autonomous vehicle).

In an optional implementation mode of step S12,

Judgment is made as to a risk of collision between the autonomous vehicle and the traffic participant appearing from the roadside blind region.

Optionally, assuming that a traffic participant crosses the road from the roadside blind region and enters in front of the autonomous vehicle, a scope in which the traffic participant might appear is calculated, including locations of the traffic participant and the vehicle at the current time and following time.

For example, after the traffic participant gets off the bus at the road side, he/she is in the blind region caused by the bus blocking the scanning of the LiDAR; if the traffic participant appears from the head of the bus and crosses the road, the LiDAR on the autonomous vehicle scans and recognizes the traffic participant, and brakes; if the distance between the traffic participant and the autonomous vehicle when the traffic participant appears is already less than the shortest braking distance of the autonomous vehicle at the current speed, a collision accident might be caused.

The speed of the traffic participant crossing the road may be specified as 5 meters/second (m/s), namely, higher than an ordinary speed of an ordinary people group, to cover most people's road-crossing behaviors.

Whether there is a risk of collision between the autonomous vehicle and the traffic participant crossing the road is calculated, for a trajectory of the autonomous vehicle intersects with a trajectory of the traffic participant crossing the road, a time taken by the autonomous vehicle to reach the intersection point=a distance between the autonomous vehicle and the intersection point ÷ the speed of the autonomous vehicle; a time taken by the traffic participant to reach the intersection point=a distance between the traffic participant and the intersection point ÷ the speed of the traffic participant. For the width of the lane being 3.5 meters, a preset safety threshold is assumingly specified as one second, namely, the traffic participant may cross the lane within one second. If an absolute value of a difference between the time for the autonomous vehicle arriving at the intersection point and the time for the traffic participant arriving at the intersection point is smaller than or equal to one second, there is the risk of collision.

For example, if the distance between the autonomous vehicle and the intersection point is 100 meters, and the speed of the autonomous vehicle is 72 km/hour, namely, 20 meters/second, the time taken by the autonomous vehicle to arrive at the intersection point is five seconds; if the distance between the traffic participant in the roadside blind region and the intersection point is 10 meters, the time taken by the traffic participant to arrive at the intersection point is 2 seconds; the difference between an absolute value of the time for the autonomous vehicle arriving at the intersection point and the time for the traffic participant arriving at the intersection point is greater than one second, there is no risk of collision.

For example, if the distance between the autonomous vehicle and the intersection point is 60 meters, and the speed of the autonomous vehicle is 72 km/hour, namely, 20 meters/second, the time taken by the autonomous vehicle to arrive at the intersection point is 3 seconds; if the distance between the traffic participant in the roadside blind region and the intersection point is 10 meters, the time taken by the traffic participant to arrive at the intersection point is 2 seconds; an absolute value of the difference between the time for the autonomous vehicle arriving at the intersection point and the time for the traffic participant arriving at the intersection point is less than or equal to one second, there is a risk of collision.

In an optional embodiment of step S13,
the travel of the autonomous vehicle is controlled according to whether there is the risk of collision.

If there is no risk of collision, the autonomous vehicle continues to travel with the current travel direction and speed.

If there is the risk of collision, the autonomous vehicle is controlled to decelerate. Optionally, the speed of the autonomous vehicle is adjusted according to the shortest braking distance of the autonomous vehicle at different speed, so that the shortest braking distance is smaller than the distance between the autonomous vehicle and the intersection point. This may absolutely ensure that the autonomous vehicle will not collide with the traffic participant appearing from the roadside blind region.

Optionally, the above judging step and controlling step are repeatedly performed with a preset time interval, for example, 0.1 second, until the autonomous vehicle drives away from the intersection point.

Optionally, if there are a plurality of roadside blind regions, the risk of collision between the autonomous vehicle and each of the traffic participants appearing from the roadside blind regions is calculated respectively, and the autonomous vehicle is controlled to decelerate to ensure the autonomous vehicle does not collide with the traffic participants appearing from the plurality of roadside blind regions.

The technical solution according to the above embodiment can be employed to avoid the case in which the autonomous vehicle in the prior art can only respond to the detected obstacle and can only brake urgently for the traffic participant appearing from the roadside blind region and cannot avoid the risk of collision; the autonomous vehicle is controlled in advance to decelerate by judging the risk of collision between the autonomous vehicle and the traffic participant appearing from the roadside blind region, thereby achieving safe driving of the autonomous vehicle.

It is to be noted that, for ease of description, the aforesaid method embodiments are all described as a combination of a series of actions, but it is to be noted to those skilled in the art that the present disclosure is not limited to the described order of actions because some steps may be performed in other orders or simultaneously according to the present disclosure. Secondly, it is to be noted to those skilled in the art that the embodiments described in the description are all for exemplary, and the involved actions and modules are not necessarily requisite for the present disclosure.

The main technical solution of the above method is as follows:
A method for vehicle control is proposed, and the method includes:
obtaining information about an obstacle to be recognized around an autonomous vehicle scanned with a LiDAR;
performing obstacle recognition using the information about the obstacle to be recognized;
determining a roadside blind region of the autonomous vehicle based on a result of the obstacle recognition;
judging a risk of collision between the autonomous vehicle and a traffic participant appearing from the roadside blind region; and
controlling travel of the autonomous vehicle according to a result of the judgment.

According to some embodiments, determining the roadside blind region of the autonomous vehicle based on the result of the obstacle recognition includes:
obtaining location information and heading information of the autonomous vehicle to determine a location relationship between the autonomous vehicle and the road where the autonomous vehicle is;
determining a blind region of the autonomous vehicle based on the location information and the result of the obstacle recognition;
determining, based on the location relationship, the roadside blind region, in the blind region, on either side of a lane where the autonomous vehicle is.

According to some embodiments, the method may further include: before judging the risk of collision between the autonomous vehicle and the traffic participant appearing from the roadside blind region:
judging whether a current road scenario is a potential collision scenario, and if the current road scenario is the potential collision scenario, continuing to perform judging the risk of collision between the autonomous vehicle and the traffic participant appearing from the roadside blind region;
wherein criteria for judging the potential collision scenario includes: there is a roadside blind region, the roadside blind region is caused by a large-sized vehicle, and the large-size vehicle is located on a road nearside lane.

According to some embodiments, performing obstacle recognition using the information about the obstacle to be recognized includes:
performing obstacle recognition on the information about the obstacle to be recognized using a preset point cloud recognition model to obtain a type, a size and a location of the obstacle.

According to some embodiments, the judging the risk of collision between the autonomous vehicle and the traffic participant appearing from the roadside blind region includes:
determining an intersection point of a predicted travel trajectory of the autonomous vehicle and a predicted trajectory of the traffic participant appearing from the roadside blind region;
determining that there is the risk of collision in response to determining that an absolute value of a different between predicted time for the autonomous vehicle arriving at the intersection point and a predicted time for the traffic participant arriving at the interaction point is smaller than or equal to a preset safety threshold,.

According to some embodiments, controlling the travel of the autonomous vehicle according to the result of the judgment includes:
controlling the autonomous vehicle to decelerate in response to determining that there is the risk of collision, so that the shortest braking distance of the autonomous vehicle is smaller than the distance between the autonomous vehicle and the intersection point.

The above introduces the method embodiments. The solution of the present disclosure will be further described in connect with some embodiments of an apparatus.

FIG. 2 is a block diagram of an apparatus for vehicle control according to some embodiments of the present disclosure. With reference to FIG. 2, the apparatus for vehicle control includes:
an obtaining module 21 configured to obtain information about an obstacle to be recognized around an autonomous vehicle scanned with a LiDAR, and to compute a roadside blind region of the autonomous vehicle;
a judging module 22 configured to judge a risk of collision between the autonomous vehicle and a traffic participant appearing from the roadside blind region; and
a controlling module 23 configured to control the autonomous vehicle to decelerate if there is the risk of collision.

In an optional implementation mode of the obtaining module 21,

According to some embodiments, an electronic device (e.g., an on-vehicle computer or on-vehicle terminal) on which the method for vehicle control for yielding to a traffic participant appearing from the roadside blind region is implemented may control a LiDAR sensor in a wired connection manner or a wireless connection manner. Specifically, the on-vehicle computer or on-vehicle terminal may control the LiDAR sensor to collect point cloud data of a certain region at a certain frequency. The above target region may be a region of the obstacle to be detected.

It is to be noted that the wireless connection manner may include but not limited to 3G/4G connection, WiFi connection, Bluetooth connection, WiMAX connection, Zigbee connection, UWB (ultra wideband) connection, and other currently-known or future-developed wireless connection manners.

The information about the obstacle to be recognized in some embodiments may be obtained by scanning with a LiDAR. The specification of the LiDAR may employ 16 lines, 32 lines or 64 lines, etc. The larger the number of lines is, the larger the unit energy density of the LiDAR is. In some embodiments, the LiDAR mounted on the current vehicle rotates 360 times each second, and scans for the information about the obstacle to be recognized around the current vehicle, the information being a frame of information about obstacle to be recognized. The information about obstacle to be recognized in some embodiments may include point cloud of the obstacle to be recognized and a reflection value of the obstacle to be recognized. There may be one obstacle or a plurality of obstacles to be recognized around the current vehicle. After the LiDAR scans, a centroid position of the current vehicle may be taken as an origin of a coordinate system, two directions parallel to a horizontal plane are taken as an x direction and a y direction, respectively, serving as a lengthwise direction and a widthwise direction, and a direction perpendicular to the ground surface is taken as a z direction, serving as a height direction. Then, the obstacle to be recognized may be identified in the coordinate system according to a relative position and distance between each point in the point cloud of the obstacle to be recognized and the origin.

In some embodiments, after the information about the obstacle to be recognized around the autonomous vehicle is obtained, a preset point cloud recognition model is used to recognize the obstacle to be recognized. The preset point cloud recognition model may be one of various pre-trained algorithms capable of recognizing the obstacle in the point cloud data, for example, ICP (Iterative Closest Point) algorithm, random forest algorithm or the like. After one or more obstacles in the point cloud data are recognized with the point cloud recognition model, the recognized obstacle is marked to obtain a marking result. When the recognized obstacle is marked, the marked shape may be a smallest rectangular parallelepiped circumscribing each obstacle, or may be an irregular curved surface close to the outer surface of each obstacle. It is to be noted that the above marking result includes the recognition result of each obstacle, e.g., the point cloud data includes a vehicle, a traffic participant and a tree, and that the marking result may also include a numerical number or character representing a different obstacle, for example, 1 represents a bus, 2 represents a car, and 3 represents a traffic participant.

The traffic participant may be a pedestrian, a bicycle, a vehicle, an animal etc. When the traffic participant appears on the road, it affects the travel of the autonomous vehicle.

In some embodiments, an example is taken in which the traffic participant is a pedestrian.

In some embodiments, a roadside blind region of the autonomous vehicle is obtained by calculating based on the travel direction of the autonomous vehicle and the position and size of the obstacle.

The location information and heading information of the autonomous vehicle are obtained, a location relationship between the autonomous vehicle and a road where the autonomous vehicle lies is determined, and the blind region of the autonomous vehicle is obtained by calculating based on the location relationship and the recognition result of the obstacle.

Optionally, a specific location of the autonomous vehicle on the road is determined by matching high-precision location information of the autonomous vehicle with a series of latitude and longitude recording points of road data, and then the blind region of the autonomous vehicle is obtained by calculating according to a road environment where the autonomous vehicle lies.

Optionally, tangential lines are made towards left and right edges of the obstacle by taking the LiDAR of the autonomous vehicle as the origin, and a sector region formed by the inside of the two tangential lines and the obstacle is determined as the blind region. The blind region is caused by the obstacle blocking the scanning of the LiDAR.

In the embodiments, a risk of potential collision between the autonomous vehicle and the traffic participant suddenly appearing ahead of the autonomous vehicle from the roadside blind region is focused on. Since a traffic participant in the blind region blocked by a vehicle in front of the autonomous vehicle will not suddenly appear, it does not affect the safe travel of the autonomous vehicle.

Optionally, a roadside blind region of either side of the lane where the autonomous vehicle is in the blind region is determined according to the lane where the autonomous vehicle is.

The roadside blind region is generally caused by a large-sized vehicle such as a bus or a truck parked on the nearside lane of the road. Since the large-sized vehicle has a large volume, it will block the scanning of the LiDAR so that the autonomous vehicle cannot know whether there is a traffic participant or vehicle at the backside of the large-sized vehicle. If the traffic participant suddenly enters from the roadside blind region into the lane where the autonomous vehicle is travelling, even though the autonomous vehicle brakes, it is probably that the autonomous vehicle collides with the traffic participant since the braking distance is limited.

Judgement is made as to whether the current road scenario is a potential collision scenario. Judging criteria include: there is a roadside blind region, the roadside blind region is caused by a large-sized vehicle, and the large-size vehicle is individually located on the road nearside lane.

Optionally, merely the roadside blind region caused by the large-sized vehicle is generally considered. The preset point cloud recognition model may recognize the type and size of the corresponding obstacle to judge whether the obstacle is a large-sized vehicle.

Optionally, the lane lines of the road are recognized by a sensor such as a camera on the autonomous vehicle to determine whether the large-sized vehicle is located on the road nearside lane. If it is judged that the large-sized vehicle is parked on the lane outside the current lane, the large-sized vehicle is probably a bus at a bus stop for passengers getting on or off. In this case, it is probably that a traffic participant suddenly enters from the head of the bus into the lane where the autonomous vehicle is traveling (in the case that the bus is a bus traveling in the same direction as the autonomous vehicle), or suddenly enters from the tail of the bus into the lane where the autonomous vehicle is traveling (in the case that the bus is a bus traveling in a direction opposite to the autonomous vehicle).

Optionally, if the large-sized vehicle is individually located on the nearside lane of the road, it is considered that there is a large probability that a traffic participant appears from the roadside blind region in front of the large-sized vehicle and suddenly enters from the head of the vehicle into the lane where the autonomous vehicle is traveling (in the case that the large-sized vehicle is a bus traveling in the same direction as the autonomous vehicle), or suddenly enters from the tail of the bus into the lane where the autonomous vehicle is traveling (in the case that the bus is a bus traveling in a direction opposite to the autonomous vehicle).

In an optional implementation mode of the judging module 22,

Judgment is made as to a risk of collision between the autonomous vehicle and the traffic participant appearing from the roadside blind region.

Optionally, assuming that a traffic participant crosses the road from the roadside blind region and enters in front of the autonomous vehicle, a scope in which the traffic participant might appear is calculated, including locations of the traffic participant and the vehicle at the current time and following time.

For example, after the traffic participant gets off the bus at the road side, he/she is in the blind region caused by the bus blocking the scanning of the LiDAR; if the traffic participant appears from the head of the bus and crosses the road, the LiDAR on the autonomous vehicle scans and recognizes the traffic participant, and brakes; if the distance between the traffic participant and the autonomous vehicle when the traffic participant appears is already less than the shortest braking distance of the autonomous vehicle at the current speed, a collision accident might be caused.

The speed of the traffic participant crossing the road may be specified as 5 meters/second (m/s), namely, higher than an ordinary speed of an ordinary people group, to cover most people's road-crossing behaviors.

Whether there is a risk of collision between the autonomous vehicle and the traffic participant crossing the road is calculated, for a trajectory of the autonomous vehicle intersects with a trajectory of the traffic participant crossing the road, a time taken by the autonomous vehicle to reach the intersection point=a distance between the autonomous vehicle and the intersection point ÷ the speed of the autonomous vehicle; a time taken by the traffic participant to reach the intersection point=a distance between the traffic participant and the intersection point ÷the speed of the traffic participant. For the width of the lane being 3.5 meters, a preset safety threshold is assumingly specified as one second, namely, the traffic participant may cross the lane within one second. If an absolute value of a difference between the time for the autonomous vehicle arriving at the intersection point and the time for the traffic participant arriving at the intersection point is smaller than or equal to one second, there is the risk of collision.

For example, if the distance between the autonomous vehicle and the intersection point is 100 meters, and the speed of the autonomous vehicle is 72 km/hour, namely, 20 meters/second, the time taken by the autonomous vehicle to arrive at the intersection point is five seconds; if the distance between the traffic participant in the roadside blind region and the intersection point is 10 meters, the time taken by the traffic participant to arrive at the intersection point is 2 seconds; the difference between an absolute value of the time for the autonomous vehicle arriving at the intersection point and the time for the traffic participant to reach the intersection point is greater than one second, there is no risk of collision.

For example, if the distance between the autonomous vehicle and the intersection point is 60 meters, and the speed of the autonomous vehicle is 72 km/hour, namely, 20 meters/second, the time taken by the autonomous vehicle to arrive at the intersection point is 3 seconds; if the distance between the traffic participant in the roadside blind region and the intersection point is 10 meters, the time taken by the traffic participant to arrive at the intersection point is 2 seconds; an absolute value of the difference between the time for the autonomous vehicle arriving at the intersection point and the time for the traffic participant arriving at the intersection point is less than or equal to one second, there is a risk of collision.

In an optional embodiment of the controlling module 23,
the travel of the autonomous vehicle is controlled according to whether there is the risk of collision.

If there is no risk of collision, the autonomous vehicle continues to travel with the current travel direction and speed.

If there is the risk of collision, the autonomous vehicle is controlled to decelerate.

Optionally, the speed of the autonomous vehicle is adjusted according to the shortest braking distance of the autonomous vehicle at a different speed, so that the shortest braking distance is smaller than the distance between the autonomous vehicle and the intersection point. This may absolutely ensure that the autonomous vehicle will not collide with the traffic participant appearing from the roadside blind region.

Optionally, the above judging step and controlling step are repeatedly performed with a preset time interval, for example, 0.1 second, until the autonomous vehicle drives away from the intersection point.

Optionally, if there are a plurality of roadside blind regions, the risk of collision between the autonomous vehicle and each of the traffic participants appearing from the roadside blind regions is calculated respectively, and the autonomous vehicle is controlled to decelerate to ensure the autonomous vehicle does not collide with the traffic participants appearing from the plurality of roadside blind regions.

The technical solution according to the above embodiment can be employed to avoid the case in which the autonomous vehicle in the prior art can only respond to the detected obstacle and can only brake urgently for the traffic participant appearing from the roadside blind region and cannot avoid the risk of collision; the autonomous vehicle is controlled in advance to decelerate by judging the risk of collision between the autonomous vehicle and the traffic participant appearing from the roadside blind region , thereby achieving safe driving of the autonomous vehicle.

In the above embodiments, embodiments are respectively described with different emphasis, and reference may be made to related depictions in other embodiments for portions not detailed in a certain embodiment.

In the embodiments provided by the present disclosure, it should be understood that the revealed method and apparatus may be implemented in other ways. For example, the above-described embodiments for the apparatus are only exemplary, e.g., the division of the units is merely logical one, and, in reality, they can be divided in other ways upon implementation. For example, a plurality of units or components may be combined or integrated into another system, or some features may be neglected or not executed. In addition, mutual coupling or direct coupling or communicative connection as displayed or discussed may be performed via some interfaces, and indirect coupling or communicative connection of means or units may be electrical, mechanical or in other forms.

The units described as separate parts may be or may not be physically separated, the parts shown as units may be or may not be physical units, i.e., they can be located in one place, or distributed in a plurality of network units. One can select some or all the units to achieve the purpose of the embodiment according to the actual needs.

Further, in the embodiments of the present disclosure, functional units can be integrated in one processing unit, or they can be separate physical presences; or two or more units can be integrated in one unit. The integrated unit described above can be realized in the form of hardware, or they can be realized with hardware and software functional units.

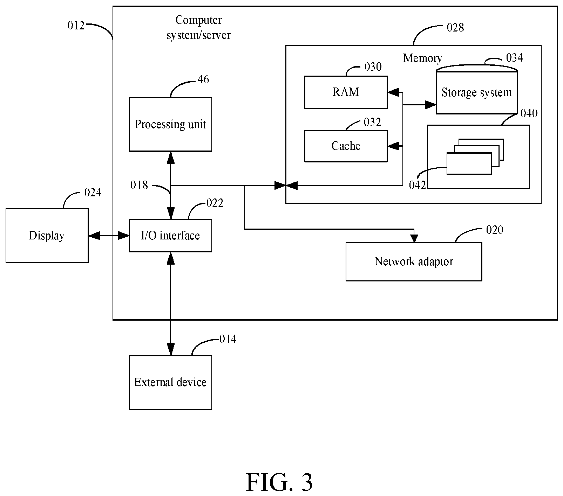

FIG. 3 illustrates a block diagram of an example computer system/server 012 adapted to implement an implementation mode of the present disclosure. The computer system/server 012 shown in FIG. 3 is only an example, and should not bring any limitation to the functions and use scope of the embodiments of the present disclosure.

With reference to FIG. 3, the computer system/server 012 is shown in the form of a general-purpose computing device. The components of the computer system/server 012 may include, but are not limited to, one or more processors or processing units 016, a system memory 028, and a bus 018 that couples various system components including the system memory 028 and the processing unit 016.

Bus 018 represents one or more of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus.

Computer system/server 012 typically includes a variety of computer system readable media. Such media may be any available media that is accessible by computer system/server 012, and it includes both volatile and non-volatile media, removable and non-removable media.

Memory 028 can include computer system readable media in the form of volatile memory, such as random access memory (RAM) 030 and/or cache memory 032. Computer system/server 012 may further include other removable/non-removable, volatile/non-volatile computer system storage media. By way of example only, storage system 034 can be provided for reading from and writing to a non-removable, non-volatile magnetic media (not shown in FIG. 3 and typically called a "hard drive"). Although not shown in FIG. 3, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each drive can be connected to bus 018 by one or more data media interfaces. The memory 028 may include at least one program product having a set of (e.g., at least one) program modules that are configured to carry out the functions of embodiments of the present disclosure.

Program/utility 040, having a set of (at least one) program modules 042, may be stored in the system memory 028 by way of example, and not limitation, as well as an operating system, one or more disclosure programs, other program modules, and program data. Each of these examples or a certain combination thereof might include an implementation of a networking environment. Program modules 042 generally carry out the functions and/or methodologies of embodiments of the present disclosure.

Computer system/server 012 may also communicate with one or more external devices 014 such as a keyboard, a pointing device, a display 024, etc.; with one or more devices that enable a user to interact with computer system/server 012; and/or with any devices (e.g., network card, modem, etc.) that enable computer system/server 012 to communicate with one or more other computing devices. Such communication can occur via Input/Output (I/O) interfaces 022. Still yet, computer system/server 012 can communicate with one or more networks such as a local area network (LAN), a general wide area network (WAN), and/or a public network (e.g., the Internet) via network adapter 020. As shown in the figure, network adapter 020 communicates with the other communication modules of computer system/server 012 via bus 018. It should be understood that although not shown in FIG. 3, other hardware and/or software modules could be used in conjunction with computer system/server 012. Examples, include, but are not limited to: microcode, device drivers, redundant processing units, external disk drive arrays, RAID systems, tape drives, and data archival storage systems, etc.

The processing unit 016 executes the functions and/or methods described in the embodiments of the present disclosure by running the programs stored in the system memory 028.

The aforesaid computer program may be arranged in the computer storage medium, namely, the computer storage medium is encoded with the computer program. The computer program, when executed by one or more computers, enables one or more computers to execute the flow of the method and/or operations of the apparatus as shown in the above embodiments of the present disclosure.

As time goes by and technologies develop, the meaning of medium is increasingly broad. A propagation channel of the computer program is no longer limited to tangible medium, and it may also be directly downloaded from the network. The computer-readable medium of the some embodiments may employ any combinations of one or more computer-readable media. The machine readable medium may be a machine readable signal medium or a machine readable storage medium. A machine readable medium may include, but not limited to, an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the text herein, the computer readable storage medium can be any tangible medium that include or store programs for use by an instruction execution system, apparatus or device or a combination thereof.

The computer-readable signal medium may be included in a baseband or serve as a data signal propagated by part of a carrier, and it carries a computer-readable program code therein. Such propagated data signal may take many forms, including, but not limited to, electromagnetic signal, optical signal or any suitable combinations thereof. The computer-readable signal medium may further be any computer-readable medium besides the computer-readable storage medium, and the computer-readable medium may send, propagate or transmit a program for use by an instruction execution system, apparatus or device or a combination thereof.

The program codes included by the computer-readable medium may be transmitted with any suitable medium, including, but not limited to radio, electric wire, optical cable, RF or the like, or any suitable combination thereof.

Computer program code for carrying out operations disclosed herein may be written in one or more programming languages or any combination thereof. These programming languages include an object oriented programming language such as Java, Smalltalk, C++ or the like, and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Finally, it is appreciated that the above embodiments are only used to illustrate the technical solutions of the present disclosure, not to limit the present disclosure; although the present disclosure is described in detail with reference to the above embodiments, those having ordinary skill in the art should understand that they still can modify technical solutions recited in the aforesaid embodiments or equivalently replace partial technical features therein; these modifications or substitutions do not make essence of corresponding technical solutions depart from the spirit and scope of technical solutions of embodiments of the present disclosure.

## Claims

1. A method for vehicle control, **characterized in that** the method comprises:
obtaining information about an obstacle to be recognized around an autonomous vehicle scanned with a LiDAR;
performing obstacle recognition using the information about the obstacle to be recognized;
determining a roadside blind region of the autonomous vehicle based on a result of the obstacle recognition;
judging a risk of collision between the autonomous vehicle and a traffic participant appearing from the roadside blind region; and
controlling travel of the autonomous vehicle according to a result of the judgment.

2. The method according to claim 1, wherein determining the roadside blind region of the autonomous vehicle based on the result of the obstacle recognition comprises:
obtaining location information and heading information of the autonomous vehicle to determine a location relationship between the autonomous vehicle and the road where the autonomous vehicle is;
determining a blind region of the autonomous vehicle based on the location information and the result of the obstacle recognition; and
determining, based on the location relationship, the roadside blind region, in the blind region, on either side of a lane where the autonomous vehicle is.

3. The method according to claim 1, further comprising: before judging the risk of collision between the autonomous vehicle and the traffic participant appearing from the roadside blind region,
judging whether a current road scenario is a potential collision scenario, and if the current road scenario is the potential collision scenario, continuing to perform judging the risk of collision between the autonomous vehicle and the traffic participant appearing from the roadside blind region;
wherein criteria for judging the potential collision scenario comprises: there is a roadside blind region, the roadside blind region is caused by a large-sized vehicle, and the large-size vehicle is located on a road nearside lane .

4. The method according to any one of claims 1-3, wherein performing obstacle recognition using the information about the obstacle to be recognized comprises:
performing obstacle recognition on the information about the obstacle to be recognized using a preset point cloud recognition model to obtain a type, a size and a location of the obstacle.

5. The method according to any one of claims 1-3, wherein judging the risk of collision between the autonomous vehicle and the traffic participant appearing from the roadside blind region comprises:
determining an intersection point of a predicted travel trajectory of the autonomous vehicle and a predicted trajectory of the traffic participant appearing from the roadside blind region; and
determining that there is the risk of collision in response to determining that an absolute value of a difference between a predicted time for the autonomous vehicle arriving at the intersection point and a predicted time for the traffic participant arriving at the interaction point is smaller than or equal to a preset safety threshold.

6. The method according to claim 5, wherein controlling the travel of the autonomous vehicle according to the result of the judgment comprises:
controlling the autonomous vehicle to decelerate in response to determining that there is the risk of collision, so that the shortest braking distance of the autonomous vehicle is smaller than the distance between the autonomous vehicle and the intersection point.

7. An apparatus for yielding to a traffic participant appearing from a roadside blind region with a LiDAR, **characterized in that** the apparatus comprises:
an obtaining module configured to obtain information about an obstacle to be recognized around an autonomous vehicle scanned with the LiDAR, to perform obstacle recognition using the information about the obstacle to be recognized, and to determine a roadside blind region of the autonomous vehicle based on a result of the obstacle recognition;
a judging module configured to judge a risk of collision between the autonomous vehicle and a traffic participant appearing from the roadside blind region; and
a controlling module configured to control travel of the autonomous vehicle according to a result of the judgement by the judging module.

8. The apparatus according to claim 7, wherein the obtaining module is specifically configured to:
obtain location information and heading information of the autonomous vehicle to determine a location relationship between the autonomous vehicle and the road where the autonomous vehicle is;
determine a blind region of the autonomous vehicle based on the location information and the result of the obstacle detection; and
determine, based on the location relationship, the roadside blind region, in the blind region, on either side of a lane where the autonomous vehicle is.

9. The apparatus according to claim 7, wherein the judging module is further configured to, before judging the risk of collision between the autonomous vehicle and the traffic participant appearing from the roadside blind region, judge whether a current road scenario is a potential collision scenario, and if the current road scenario is the potential collision scenario, continue to perform judging the risk of collision between the autonomous vehicle and the traffic participant appearing from the roadside blind region;
wherein criteria for judging the potential collision scenario comprises: there is a roadside blind region, the roadside blind region is caused by a large-sized vehicle, and the large-size vehicle is located on a road nearside lane.

10. The apparatus according to any one of claims 7-9, wherein upon performing obstacle recognition using the information about the obstacle to be recognized, the obtaining module is specifically configured to:
perform obstacle recognition on the information about the obstacle to be recognized using a preset point cloud recognition model, to obtain a type, a size and a location of the obstacle.

11. The apparatus according to any one of claims 7-9, wherein the judging module is specifically configured to:
determine an intersection point of a predicted travel trajectory of the autonomous vehicle and a predicted trajectory of the traffic participant appearing from the roadside blind region; and
determine that there is the risk of collision in response to determining that an absolute value of a difference between a predicted time for the autonomous vehicle arriving at the intersection point and a predicted time for the traffic participant arriving at the interaction point is smaller than or equal to a preset safety threshold,.

12. The apparatus according to claim 11, wherein the controlling module is specifically configured to:
control the autonomous vehicle to decelerate in response to determining that there is the risk of collision, so that the shortest braking distance of the autonomous vehicle is smaller than the distance between the autonomous vehicle and the intersection point.

13. A computer device, comprising:
a memory,
a processor, and
a computer program which is stored on the memory and runs on the processor, wherein the processor, upon executing the program, implements the method according to any of claims 1-6.

14. A computer-readable storage medium on which a computer program is stored, wherein the program, when executed by the processor, implements the method according to any of claims 1-6.
